# EUROPÄISCHE PATENTSCHRIFT

(11) **EP 2 694 270 B1**
(45) Veröffentlichungstag und Bekanntmachung des Hinweises auf die Patenterteilung: **27.05.2015**
(21) Anmeldenummer: 12740460.6
(22) Anmeldetag: 30.03.2012
(51) Int. Cl.: B29C 49/06, B29C 49/12, B29C 49/16, B29C 49/36, B29C 49/64, B29K 23/00, B29K 67/00

(54) **VORRICHTUNG ZUR BLASFORMUNG VON BEHÄLTERN**
DEVICE FOR BLOW-MOULDING CONTAINERS
DISPOSITIF POUR LE MOULAGE DE RECIPIENTS PAR SOUFFLAGE

(30) Priorität: 08.04.2011 DE 102011018583
(43) Veröffentlichungstag der Anmeldung: 12.02.2014
(73) Patentinhaber: KHS Corpoplast GmbH, 22145 Hamburg (DE)
(72) Erfinder: JOHANNSEN, Jörg, 21640 Bliedersdorf (DE)
(74) Vertreter: Hausfeld, Norbert
(86) Internationale Anmeldenummer: PCT/DE2012/000361
(87) Internationale Veröffentlichungsnummer: WO 2012/139551

(56) Entgegenhaltungen:
- EP-A1- 1 795 328
- EP-A2- 0 293 147
- FR-A1- 2 443 915
- JP-A- 2001 088 202
- JP-A- 2004 090 425

## Beschreibung

Die Erfindung betrifft eine Vorrichtung zur Blasformung von Behältern aus einem thermoplastischen Material, die mindestens eine mit einer Blasform versehene Blasstation aufweist und die mit einer Reckeinrichtung versehen ist, in deren Bereich eine Reckstange zur Beaufschlagung eines in die Blasform einsetzbaren Vorformlings angeordnet ist und bei der die Reckstange mit einem Reckstangenantrieb verbunden ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert. Weitere Vorrichtungen zur Blosformung sind in EP-A 1795 328, FR-A-2443915 und EP-A-0293147 beschrieben. Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung der Bewegungskoordinierung der Reckstange kann nach unterschiedlichen Prinzipien erfolgen. Bekannt ist es beispielsweise, die Reckstange unter Verwendung von Kurvenrollen zu positionieren, die entlang von Kurvenbahnen geführt sind. Eine besonders hohe Genauigkeit und Reproduzierbarkeit des Reckvorganges läßt sich bei derartigen Kurvensteuerungen realisieren, wenn die Kurvenrollen zweiseitig geführt sind und hierdurch einer exakt definierten Bahn folgen. Derartige Kurvensteuerungen weisen aber den Nachteil auf, dass schwere und räumlich groß dimensionierte Kurvenbahnen verwendet werden müssen, die in der Regel aus Stahl gefertigt sind. Eine Umrüstung des Recksystems zur Durchführung abgeänderter Reckbewegungen verursacht einen hohen Aufwand.

Es sind ebenfalls Kurvensteuerungen bekannt, bei denen die Kurvenrollen lediglich einseitig geführt werden und unter Verwendung von Pneumatikzylindern gegen die einseitige Führungsbahn gedrückt werden. Es liegt hier zwar eine vereinfachte und somit preiswertere und leichtere Konstruktion vor, in Abhängigkeit von den auftretenden Reckkräften kann die Kurvenrolle aber entgegen der belastenden pneumatischen Spannkraft von der Kurvenbahn abheben und der Reckvorgang verläßt hierdurch die vorgegebene Prozeßcharakteristik. Hieraus resultiert eine verschlechterte Qualität der geblasenen Behälter.

Sehr genaue Recksysteme können unter Verwendung von elektrischen Linearmotoren bereitgestellt werden. Linearmotoren der erforderlichen Leistungsstärke sind derzeit jedoch noch sehr teuer und beanspruchen darüber hinaus einen großen Bauraum.

Bekannt geworden sind ebenfalls bereits reine pneumatische Recksysteme sowie Hybridsysteme, bei denen sowohl pneumatische Antriebe als auch Linearmotoren zum Einsatz kommen. Die Reckstangen sind typischerweise stabförmig ausgebildet und weisen im Bereich ihres in den zu reckenden Vorformling einführbaren Endes eine gerundete Reckstangenkuppe auf. Die Rundung ist typischerweise halbkugelartig ausgeführt.

Übliche Vorformlinge weisen im Bereich ihrer inneren Begrenzung im Bereich ihrer einem Mündungsabschnitt abgewandten Ausdehnung innenseitig ebenfalls eine gerundete Kontur auf, die häufig ähnlich zu einer Halbkugel gestaltet ist. Die Reckstange kann hierdurch bis in ein Zentrum des Bodens des Vorformlings eingefahren werden und führt hierdurch nicht nur eine Reckung der Seitenwandungen des Vorformlings, sondern auch eine Reckung des im Boden des Vorformlings angeordneten Materials durch.

Zur Realisierung von Materialeinsparungen kommen seit einiger Zeit auch Vorformlinge zum Einsatz, die keine halbkugelartigen Bodenbereiche mehr besitzen, sondern beispielsweise nach außen spitz zulaufende Bodenbereiche, nach außen gewölbte kegelartige Bodenbereiche oder sich gestuft verjüngende Bodenbereiche besitzen.

Durch die Gestaltung der Bodenbereiche dieser Vorformlinge tritt das Problem auf, dass sich das Material im Bodenbereich durch konventionelle Reckstangen nur unzureichend recken lässt. Die Reckstangen schieben vielmehr einen Teil des Materials vor sich her und diese Materialbereiche führen zu Verdickungen im Bodenbereich der geblasenen Flaschen. Die Verdickungen haben zum einen den Nachteil, dass unnötig viel Material im Bodenbereich der geblasenen Behälter angesammelt ist, was zu erhöhten Materialkosten führt, da das betreffende Material nicht anderweitig genutzt werden kann. Darüber hinaus führt die geringe Verstreckung des Materials in diesem Bereich dazu, dass die Flaschen eine verminderte Druckfestigkeit und eine erhöhte Rissanfälligkeit in diesen Bereichen besitzen.

Aufgabe der vorliegenden Erfindung ist es, eine Vorrichtung der einleitend genannten Art derart zu gestalten, dass eine günstige Materialverteilung in den geblasenen Behältern unterstützt wird.

Diese Aufgabe wird erfindungsgemäß dadurch gelöst, dass die Reckstange im Bereich eines in einen von der Blasform begrenzten Innenraum hineinragenden Endes eine Außenkontur aufweist, die an eine Innenkontur eines zu reckenden Vorformlings im Bereich dessen einem Mündungsabschnitt abgewandt angeordneten geschlossenen Boden angepasst ist.

Eine mindestens bereichsweise Anpassung der Außenkontur des Endes der Reckstange an die Innenkontur des zu reckenden Vorformlings ermöglicht eine flächige Übertragung von Reckkräften auf den Vorformling auch dann, wenn dieser spitz zulaufende oder stufenförmig verjüngte Bodenbereiche aufweist. Es wird insbesondere hierdurch verhindert, dass die Reckstangenkuppe nur in seitlichen Bereichen einen Kontakt mit dem Vorformling besitzt und hierdurch unverstrecktes Material bei der Durchführung des Reckvorganges vor sich her schiebt.

Eine typische Konturanpassung erfolgt dadurch, dass die Reckstange im Bereich einer Reckstangenkuppe eine Verjüngung aufweist.

Bei sich kegelartig verjüngenden Vorformlingen ist insbesondere daran gedacht, dass die Verjüngung mindestens abschnittweise kegelartig ausgebildet ist.

Eine großflächige Kraftübertragung wird dadurch unterstützt, dass die Verjüngung mindestens abschnittweise eine flache Seitenwand aufweist.

Zur Vermeidung von Stanzeffekten wird vorgeschlagen, dass die Reckstange im Bereich eines Reckstangenendes eine Abflachung aufweist.

Eine vollständige Konturanpassung erst im Anschluß an einen Beginn des Verformungsvorganges kann dadurch erreicht werden, dass sich die Reckstange mindestens abschnittweise in Richtung auf ein Reckstangenende derart stärker verjüngt als ein Bodenbereich des Vorformlings, dass zwischen dem Bodenbereich und dem Reckstangenende ein Winkel in einem Bereich von 0,1 bis 5° aufgespannt ist.

Gemäß einer anderen Ausführungsform ist auch vorgesehen, dass sich die Reckstange stufenförmig verjüngt.

Eine stufenweise Verjüngung der Reckstange kann dadurch realisiert werden, dass die stufenförmige Verjüngung aus einem Kegelstumpf, einem zylinderartigen Zwischensegment und einem gerundet konturierten Endsegment ausgebildet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine teilweise Darstellung eines Längsschnittes durch eine in einen Vorformling eingefahrene Reckstange,
- Fig. 6: eine teilweise Darstellung einer Seitenansicht einer anderen Reckstange und
- Fig. 7: eine schematische Darstellung zur Veranschaulichung eines Winkels zwischen Kontaktflächen einer Reckstangenkuppe sowie einer Innenbegrenzung eines unverformten Vorformlings.

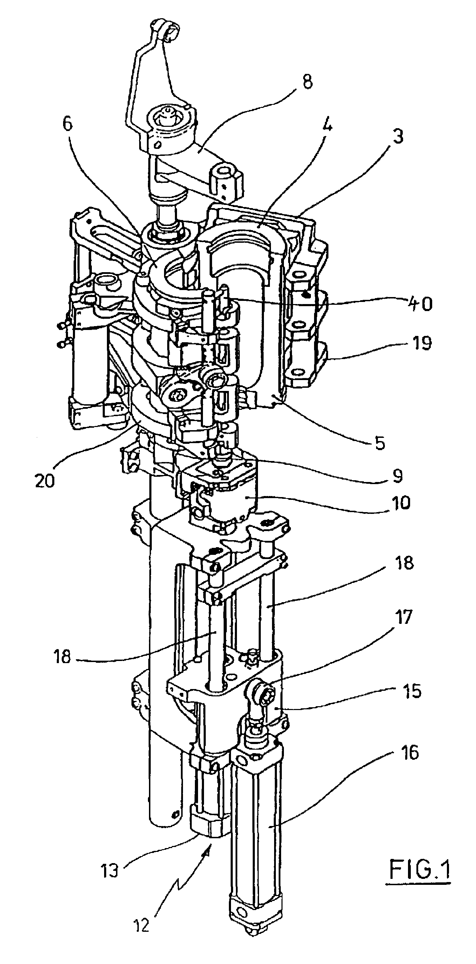

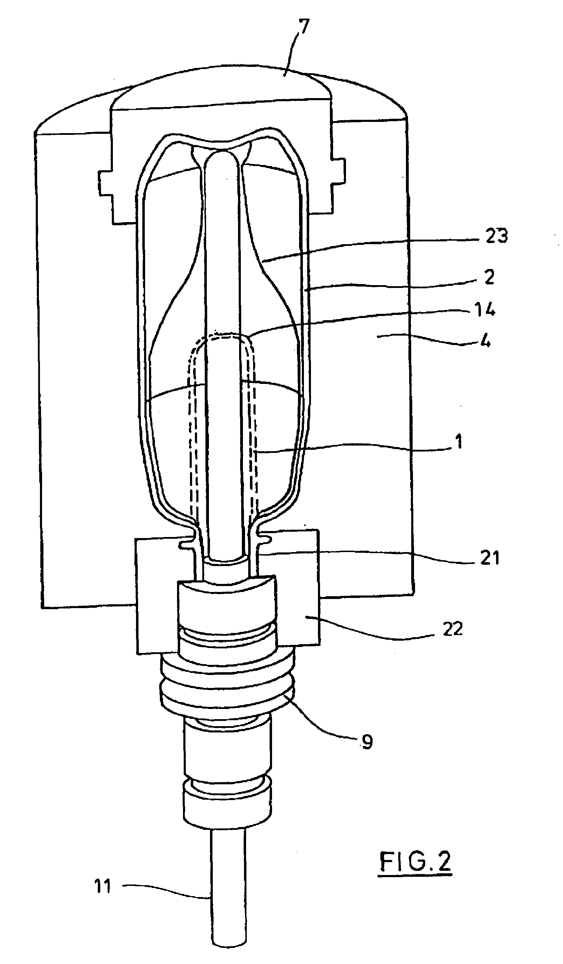

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

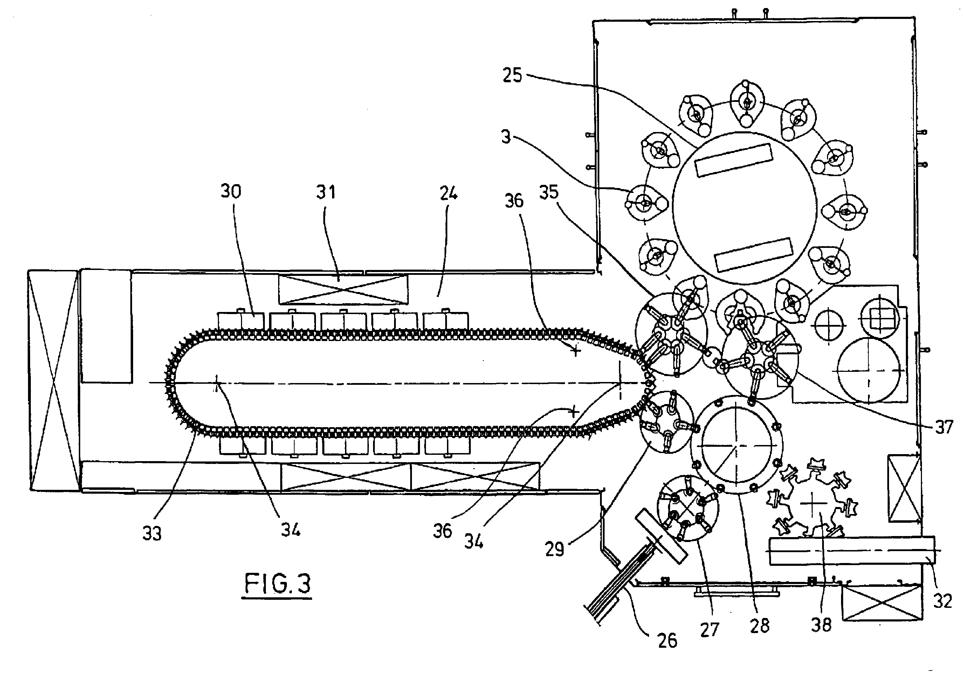

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzusgannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

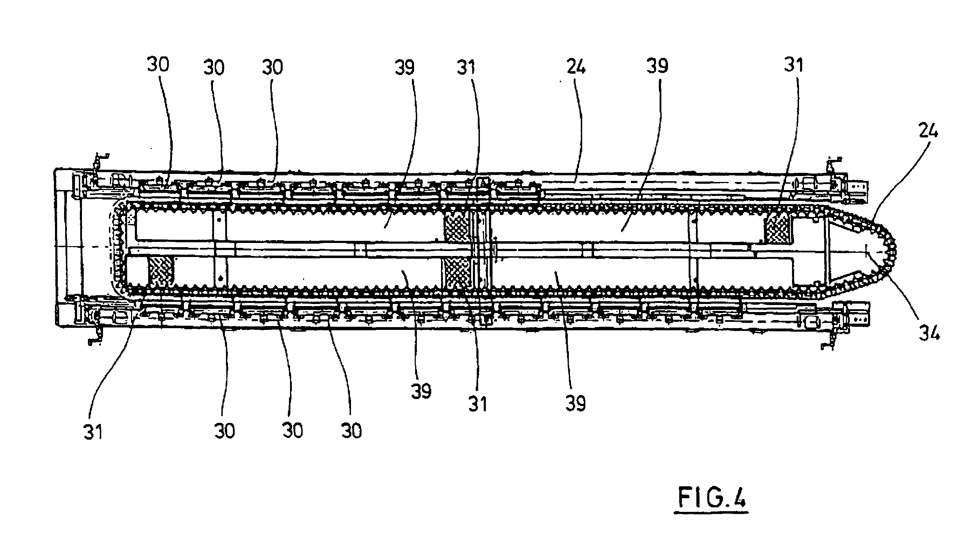

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

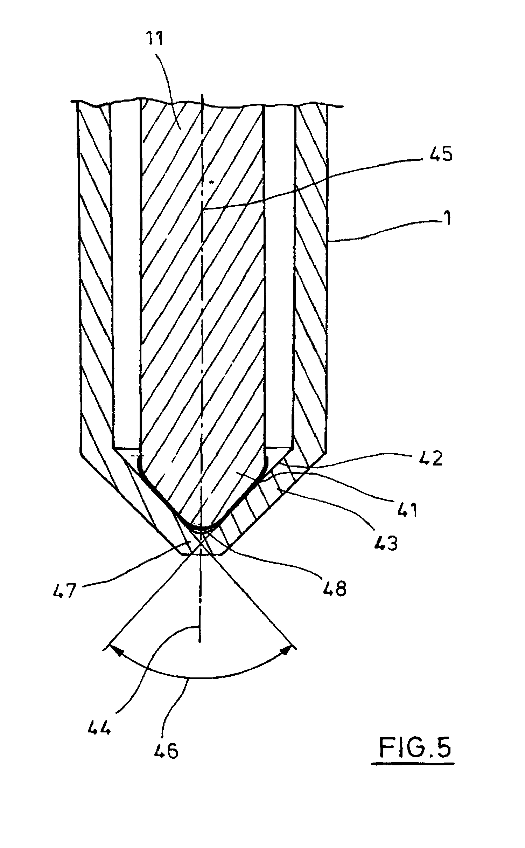

Fig. 5 zeigt eine teilweise Darstellung eines Längsschnittes durch einen Vorformling (1). In den Vorformling (1) ist die Reckstange (11) eingefahren. Es wird ein Betriebszustand veranschaulicht, bei dem die Reckstange (11) mit einer Reckstangenkuppe (41) an einer Innenbegrenzung (42) eines Bodenbereiches (43) des Vorformlings (1) anliegt.

Es ist zu erkennen, dass sich der Bodenbereich (43) in Richtung einer Vorformlingslängsachse (44) zumindest abschnittweise kegelförmig verjüngt. Zur Anpassung an diese Gestaltung des Bodenbereiches (43) weist die Reckstangenkuppe (41) in Richtung einer Reckstangenlängsachse (45) eine zumindest abschnittweise kegelförmige Verjüngung auf. Die Kontur der kegelförmigen Verjüngung der Reckstangenkuppe (41) ist an die Kontur der kegelförmigen Verjüngung des Bodenbereiches (43) angepasst.

Beim dargestellten Ausführungsbeispiel beträgt ein Winkel (46) etwa 80°. Der Winkel (46) beschreibt sowohl die Verjüngung des Bodenbereiches (43) als auch die Verjüngung der Reckstangenkuppe (41).

Zur Vermeidung zu hoher Kräfte im Bereich eines Zentrums (47) des Bodenbereiches (43) ist es möglich, die Konturanpassung der Reckstangenkuppe (41) und des Bodenbereiches (43) nicht vollständig vorzunehmen, sondern im Bereich eines Reckstangenendes (48) eine Materialabflachung, gegebenenfalls mit einem gerundeten Konturverlauf, vorzusehen.

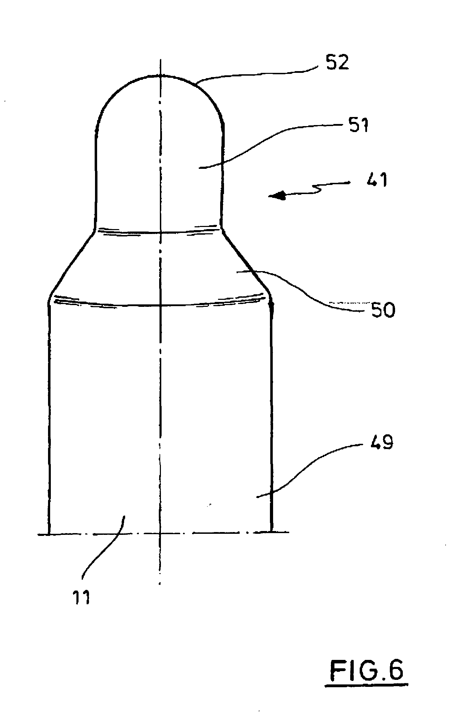

Fig. 6 zeigt eine Ausführungsform für eine abgestufte Verjüngung der Reckstange (11) im Bereich der Reckstangenkuppe (41). Im Anschluss an einen zylinderförmigen Hauptbereich (49) schließt sich ein Kegelstumpf (50) an, der in ein zylinderförmiges Zwischensegment (51) übergeleitet ist. Im Anschluss an das Zwischensegment (51) erstreckt sich ein gerundet konturiertes Endsegment (52). Ein zur Reckung mit der Reckstange (11) gemäß Fig. 6 vorgesehener Vorformling (1) besitzt im Bereich seines Bodenbereiches (43) eine Innenkontur, die an die Gestaltung der Reckstange im Bereich des Kegelstumpfes (50), des Zwischensegmentes (51) sowie des Endsegmentes (52) angepaßt ist. Es liegt somit auch hier eine Konturanpassung der Reckstange (11) an den Bodenbereich (43) des Vorformlings (1) vor.

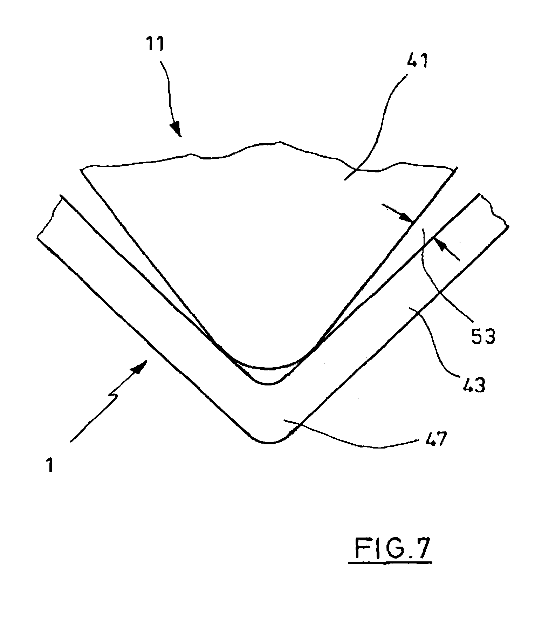

Fig. 7 veranschaulicht für die Gestaltung der Reckstange (11) entsprechend Fig. 5 eine spezielle Ausführungsform, bei der ein Winkel (53) ausgehend vom Zentrum (47) zwischen der Reckstangenkuppe (41) und dem Bodenbereich (43) vorgesehen ist. Dargestellt ist ein noch völlig unverformter Zustand des Vorformlings (1). Der Winkel (53) beträgt hier etwa 1 bis 2°. Der Winkel (53) gewährleistet, dass mit beginnender Verformung eine Anlage der Reckstange (11) am Vorformling (1) ausgehend vom Zentrum (47) erfolgt.

## Patentansprüche

1. Vorrichtung zur Blasformung von Behältern aus einem thermoplastischen Material, die mindestens eine mit einer Blasform versehene Blasstation aufweist und die mit einer Reckeinrichtung versehen ist, in deren Bereich eine Reckstange zur Beaufschlagung eines in die Blasform einsetzbaren Vorformlings angeordnet ist und bei der die Reckstange mit einem Reckstangenantrieb verbunden ist, wobei die Reckstange (11) im Bereich eines in einen von der Blasform (4) begrenzten Innenraum hineinragenden Endes eine Außenkontur aufweist, die an eine Innenkontur eines zu reckenden Vorformlings (1) im Bereich dessen einem Mündungsabschnitt (21) abgewandt angeordneten geschlossenen Bodens angepasst ist, und die Reckstange (11) im Bereich einer Reckstangenkuppe (41) eine Verjüngung aufweist, die mindestens abschnittweise kegelartig ausgebildet ist, und wobei sich die Reckstange (11) mindestens abschnittweise in Richtung auf ein Reckstangenende (48) derart stärker verjüngt als ein Bodenbereich (43) des Vorformlings (1), dass zwischen dem Bodenbereich (43) und dem Reckstangenende (48) ein Winkel (53) in einem Bereich von 0,1 bis 5° aufgespannt ist.

2. Vorrichtung nach Anspruch 1, **dadurch gekennzeichnet, dass** die Verjüngung mindestens abschnittweise eine flache Seitenwand aufweist.

3. Vorrichtung nach einem der Ansprüche 1 oder 2, **dadurch gekennzeichnet, dass** die Reckstange (11) im Bereich eines Reckstangenendes (48) eine Abflachung aufweist.

4. Vorrichtung nach einem der Ansprüche 1 bis 3, **dadurch gekennzeichnet, dass** sich die Reckstange (11) stufenförmig verjüngt.

5. Vorrichtung nach Anspruch 4, **dadurch gekennzeichnet, dass** die stufenförmige Verjüngung aus einem Kegelstumpf (50), einem zylinderartigen Zwischensegment (51) und einem gerundet konturierten Endsegment (52) ausgebildet ist.

## Claims

1. Device for the blow moulding of containers from a thermoplastic material that comprises at least one blow station that is provided with a blow mould and is provided with a drawing facility, in the region of which a draw rod is arranged for exerting an impact on a preform that can be inserted into the blow mould and in which the draw rod is connected to a draw rod drive, whereby the draw rod (11), in the region of an end projecting into an internal space that is bordered by the blow mould (4), has an external contour that is adapted to an internal contour of a preform (1) to be stretched, in the region of the closed floor thereof that is arranged to face away from an exit section (21), and the draw rod (11) comprises, in the region of a draw rod dome (41), a tapering that is provided to be cone-like, at least sections thereof, and whereby the draw rod (11), at least sections thereof, tapers more strongly in the direction of a draw rod end (48) than a floor region (43) of the preform (1) such that there is at an angle (53) in a range of 0.1 to 5° between the floor region (43) and the draw rod end (48).

2. Device according to Claim 1, **characterised in that** the tapering, at least sections thereof, comprises a flat side wall.

3. Device according to either one of the Claims 1 or 2, **characterised in that** the draw rod (11) comprises a flat portion in the region of a draw rod end (48).

4. Device according to any one of the Claims 1 to 3, **characterised in that** the draw rod (11) tapers in stepped manner.

5. Device according to Claim 4, **characterised in that** the stepped tapering is formed from a truncated cone (50), a cylinder-like intermediate segment (51), and a rounded contoured end-segment (52).

## Revendications

1. Dispositif de moulage par soufflage de récipients en un matériau thermoplastique présentant au moins une station de soufflage munie d'un moule de soufflage et doté d'un dispositif d'étirage dans lequel est agencée une barre d'étirage qui agit sur une préforme pouvant être placée dans le moule de soufflage, et dont la barre d'étirage est couplée à un entraînement de barre d'étirage, la barre d'étirage (11) présentant au niveau d'une extrémité pénétrant dans un espace intérieur délimité par le moule de soufflage (4) un contour extérieur adapté à un contour intérieur qu'une préforme (1) à étirer présente au niveau d'un fond fermé opposé à sa section d'embouchure (21), et la barre d'étirage (11) présentant au niveau d'une calotte de barre d'étirage (41) un rétrécissement qui, en partie au moins, est de conformation conique, ce rétrécissement de la barre d'étirage (11) étant, en partie au moins vers l'extrémité (48) de la barre d'étirage plus important que celui du fond (43) de la préforme (1), de sorte qu'entre le fond (43) de la préforme et l'extrémité (48) de la barre d'étirage est réservé un angle (53) compris entre 0,1 et 5°.

2. Dispositif selon la revendication 1, **caractérisé en ce que** le rétrécissement présente, sur une partie au moins de son étendue, une paroi latérale plate.

3. Dispositif selon l'une des revendications 1 ou 2, **caractérisé en ce que** la barre d'étirage (11) présente un méplat au niveau d'une extrémité (48) de la barre d'étirage.

4. Dispositif selon l'une des revendications 1 à 3, **caractérisé en ce que** la barre d'étirage (11) se rétrécit en gradins.

5. Dispositif selon la revendication 4, **caractérisé en ce que** le rétrécissement graduel comporte un tronc de cône (50), un segment intermédiaire cylindrique (51) et un segment d'extrémité à contour arrondi (52).
